# EUROPÄISCHE PATENTSCHRIFT

(11) **EP 3 941 768 B1**
(45) Veröffentlichungstag und Bekanntmachung des Hinweises auf die Patenterteilung: **04.10.2023**
(21) Anmeldenummer: 20702089.2
(22) Anmeldetag: 23.01.2020
(51) Int. Cl.: B60H 1/24, B60H 1/00, B60R 13/02, B60N 2/56

(54) **KRAFTFAHRZEUG**
MOTOR VEHICLE
VÉHICULE À MOTEUR

(30) Priorität: 19.03.2019 DE 102019203672
(43) Veröffentlichungstag der Anmeldung: 26.01.2022
(73) Patentinhaber: Audi AG, 85045 Ingolstadt (DE)
(72) Erfinder: MICHAEL, Jörg, 85055 Ingolstadt (DE); GUYOT, Bastian, 85080 Gaimersheim (DE); ALBL, Sebastian, 85080 Gaimersheim (DE)
(86) Internationale Anmeldenummer: PCT/EP2020/051586
(87) Internationale Veröffentlichungsnummer: WO 2020/187465

(56) Entgegenhaltungen:
- EP-A1- 1 852 312
- DE-A1-102011 119 550
- DE-A1-102016 116 115
- JP-A- 2006 240 539
- JP-A- 2013 095 296
- JP-A- 2020 023 216
- US-A- 2 430 335

## Beschreibung

Die Erfindung betrifft ein Kraftfahrzeug, umfassend wenigstens einen in Fahrzeuglängsrichtung verstellbaren Sitz, sowie eine Lüftungseinrichtung mit wenigstens einem Luftausströmer.

Moderne Kraftfahrzeuge, wie beispielsweise in DE 10 2016 116 115 A1 beschrieben, verfügen über Lüftungseinrichtungen mit mehreren separaten Luftausströmern, über die steuerbar Luft in den Innenraum des Fahrzeugs geblasen werden kann. Hierzu dient eine Steuerungseinrichtung, die den Lüftungsbetrieb steuert, also die Verteilung der Luft zu den entsprechenden Luftausströmern sowie den Öffnungsgrad, die Ausblasrichtung etc. Um dies zu steuern, ist beispielsweise in DE 10 2016 116 115 A1 ein Display vorgesehen, an dem entsprechende, personenindividuelle Einstellungen vorgenommen werden können, um der jeweiligen, auf einem der beiden Sitze sitzenden Personen nach Wunsch Luft zuzuführen, wobei bei dem dort beschriebenen System auch Bereiche, die luftzugsfrei sein sollen, definiert werden können. Dies ermöglicht es also, über die dort im Bereich des Armaturenbretts vorgesehenen Luftausströmer den in Fahrtrichtung gesehen hinter dem Armaturenbrett sitzenden Personen individuell Luft zuzuführen.

Über diese im Armaturenbrettbereich befindlichen Lüftungsdüsen sollen den auf den Vordersitzen befindlichen Personen Luft in jeder einnehmbaren Sitzposition zugeführt werden können, also unabhängig davon, ob der Sitz sehr nahe am Armaturenbrett oder relativ weit zurückgeschoben ist. Bei Kraftfahrzeugen mit hohem Autonomisierungsgrad hinsichtlich des Fahrens, die also idealerweise auch vollständig autonom fahren können, können insbesondere die Vordersitze jedoch sehr weit nach hinten verstellt werden, da der Fahrer, aber auch der Beifahrer, nicht mehr in den eigentlichen Fahrbetrieb eingebunden sind. Die Sitze sind dann sehr weit vom Armaturenbrett respektive dem Cockpit entfernt, so dass es nicht immer möglich ist, über die dort verbauten Luftausströmer die Personen zu erreichen, so dass eine effiziente Belüftung dann nicht sichergestellt ist.

Andere Kraftfahrzeuge, wie beispielsweise in DE 10 2011 119550 A1 beschrieben, verfügen auch über Lüftungseinrichtungen mit Luftausströmern und über bewegbare Luftlenkeinrichtungen, die eine Umlenkung des klimatisierten Luftstroms in Richtung einer auf dem Sitz befindlichen Person ermöglicht.

Der Erfindung liegt damit das Problem zugrunde, ein demgegenüber verbessertes Kraftfahrzeug anzugeben.

Zur Lösung dieses Problems ist bei einem Kraftfahrzeug der eingangs genannten Art erfindungsgemäß vorgesehen, dass die Luftlenkeinrichtung relativ zu dem Sitz in Fahrzeuglängsrichtung bewegbar und/oder in ihrer Erstreckung in Fahrzeuglängsrichtung veränderbar ist.

Bei dem erfindungsgemäßen Kraftfahrzeug ist eine Luftlenkeinrichtung vorgesehen, die dazu dient, die über den wenigstens einen positionsfesten Luftausströmer ausgeblasene Luft gezielt in Richtung einer auf dem Sitz befindlichen Person zu führen respektive umzulenken, so dass trotz Entfernung der Person von der Position des festverbauten Luftausströmers aus Richtung der Luftströmung auf die Person möglich ist und die Luft sich nicht ungerichtet im Raum verteilt. Die Luftlenkeinrichtung ist hierzu unterhalb des Fahrzeugdachs und oberhalb des Sitzes angeordnet und schalenartig ausgeführt, also zumindest in Fahrzeuglängsrichtung gewölbt, so dass in sie eingeblasene Luft des in Richtung des Fahrzeugdachs blasenden Luftausströmers gezielt über die schalenartige oder baldachinartige Luftlenkeinrichtung quasi gesammelt und umgelenkt werden kann. Zu diesem Zweck ist insbesondere eine bewegliche Anordnung der Luftlenkeinrichtung vorgesehen, so dass sich diese an eine variierende Sitzposition anpassen kann, das heißt, dass bei einer Verstellung des Sitzes in Fahrzeuglängsrichtung eine Nachführung oder Adaption der Luftlenkeinrichtung erfolgt, um bestmöglich Luft auch in der geänderten Sitzposition der Person zuführen zu können.

Der positionsfeste Luftausströmer kann dabei entweder vor dem Sitz angeordnet sein, beispielsweise im Bereich des Armaturenbretts, oder hinter dem Sitz, beispielsweise im Bereich einer Hutablage. Der Luftausströmer ist dabei so eingerichtet oder kann gegebenenfalls über eine Steuerungseinrichtung auch so eingerichtet werden, dass er in Richtung des Fahrzeugdachs und damit quasi unter die schalenartige Luftlenkeinrichtung bläst, so dass diese die Luft sammeln respektive auch verwirbeln und gezielt umlenken kann.

Auf diese Weise kann folglich bei fest verbautem oder verbauten Luftausströmern und stark variierendem Sitzabstand gleichwohl eine gute Belüftung und damit Klimatisierung im Sitzbereich erreicht werden.

Üblicherweise sind in einem Kraftfahrzeug zwei benachbarte Vordersitze vorgesehen, die üblicherweise jeweils unabhängig voneinander in Fahrzeuglängsrichtung verstellbar sind. In diesem Fall ist gemäß einer Weiterbildung der Erfindung vor oder hinter jedem Sitz wenigstens ein Luftausströmer vorgesehen, über den über ein gemeinsames oder separates Gebläse zugeführte Luft in Richtung des Fahrzeugdachs ausblasbar ist, wobei zwischen dem Fahrzeugdach und jedem Sitz jeweils eine schalenartige, bewegbare Luftlenkeinrichtung vorgesehen ist. Hier ist also jedem Sitz eine separate, dachseitig angeordnete und bewegbare Luftlenkeinrichtung zugeordnet, so dass jeder Sitz bestmöglich unabhängig von der momentanen Sitzposition belüftbar ist. Die beiden Sitze können also in beliebige unterschiedliche Positionen gebracht werden, wobei die bewegbaren Luftlenkeinrichtungen unabhängig voneinander in Bezug auf die jeweilige Sitzposition des zugeordneten Sitzes adaptiert respektive bewegt und verstellt werden. Dies ermöglicht es, sitzbezogen bestmöglich zu belüften respektive sitzbezogene Klimatisierungszonen auszubilden. Die Umlenkung respektive Zonenausbildung kann dadurch noch verbessert werden, wenn die oder jede Luftlenkeinrichtung sowohl in Längs- als auch in Querrichtung gewölbt ist, so dass aufgrund dieser in zwei Richtungen gegebenen Wölbung eine Seitenführung und damit auch Konzentrierung in Richtung des Sitzes oder Person möglich ist.

Wie beschrieben ist die Luftlenkeinrichtung in Abhängigkeit oder in Bezug zu einer sich verändernden Position adaptierbar und demzufolge anpassbar. Dies kann auf unterschiedliche Weisen erfolgen. Erfindungsgemäß kann hierzu die oder jede Luftlenkeinrichtung relativ zu dem Sitz bewegbar angeordnet sein. Das heißt, dass die Luftlenkeinrichtung, die dachseitig befestigt ist, also unterhalb des Daches hängt, unterhalb des Daches bewegt wird, um sie so ideal zum Sitz positionieren zu können.

Erfindungsgemäß ist es auch möglich, die unterhalb des Daches vorgesehene Luftlenkeinrichtung auch in ihrer Erstreckung in Fahrzeuglängsrichtung zu verändern, also zu verlängern oder zu verkürzen, je nach dem was die momentane Sitzposition gebietet. Hier wird also die Form der Luftlenkeinrichtung verändert, sie wird verlängert oder verkürzt.

Erfindungsgemäß ist es möglich, beide Alternativen auch gemeinsam vorzusehen, mithin also die Möglichkeit zu realisieren, die Luftlenkeinrichtung unterhalb des Daches verschieben zu können, als auch ihre Form respektive Erstreckung verändern zu können.

In Weiterbildung der Erfindung kann eine Steuerungseinrichtung vorgesehen sein, über die der automatische Bewegungsbetrieb und/oder die Veränderung der Erstreckung der oder jeder Luftlenkeinrichtung steuerbar ist. Über diese Steuerungseinrichtung werden also entsprechende Aktoren gesteuert, die die Bewegung der Luftlenkeinrichtung, sei es zur Positionsveränderung, sei es zur Erstreckungsveränderung, erwirken. Dabei kann eine gemeinsame Steuerungseinrichtung für beide Luftlenkeinrichtungen vorgesehen sein, sofern zwei solche Einrichtungen verbaut sind, alternativ kann auch jeder Luftlenkeinrichtung eine separate Steuerungseinrichtung zugeordnet sein.

Ist die oder jede Luftlenkeinrichtung im Fahrzeuginneren bewegbar angeordnet, so ist sie zweckmäßigerweise an wenigstens einer am Dach in Fahrzeuglängsrichtung verlaufenden Schiene längs verschiebbar geführt. Die Luftlenkeinrichtung ist schienenartig über einen geeigneten Schlitten oder dergleichen angeordnet und kann über einen geeigneten Aktor, beispielsweise einen Elektromotor, über den ein Ritzel oder dergleichen angetrieben wird, längs der Schiene bewegbar, so dass sie in Fahrzeuglängsrichtung, also in Richtung der x-Achse, verschoben werden kann. Sind zwei separate Luftlenkeinrichtungen vorgesehen, sind natürlich auch zwei separate Schienen vorgesehen.

Um den Belüftungsbetrieb noch weiter zu verbessern, kann gemäß einer Weiterbildung der Erfindung vorgesehen sein, dass die oder jede Schiene relativ zum Dach und/oder die oder jede Luftlenkeinrichtung relativ zur Schiene höhenverstellbar ist. Hierüber besteht die Möglichkeit, die Luftlenkeinrichtung vertikal zu verstellen, also den Abstand zur Person respektive zum Sitz zu variieren, was sich ebenfalls auf den Belüftungsbetrieb respektive die Luftführung auswirkt. Es besteht die Möglichkeit, die Schienen über geeignete verstellbare Halter dachseitig zu fixieren, oder die Luftlenkeinrichtung am Schlitten über einen entsprechenden verstellbaren respektive teleskopierbaren Träger zu befestigen, oder beide Verstellmöglichkeiten vorzusehen. Hierüber ist also eine Verstellung in Richtung der z-Achse möglich.

Weiterhin kann vorgesehen sein, dass die oder jede Luftlenkeinrichtung um eine vertikal zu der oder jeder Schiene verlaufende Achse drehbar ist, das heißt, dass die Luftlenkeinrichtung um die z-Achse gedreht werden kann. Dies ermöglicht es, die Luftlenkeinrichtung, wenn sie beispielsweise in ihrer Längserstreckung variiert werden kann, auf die andere Seite zu drehen, so dass sie sich entweder in Fahrzeuglängsrichtung nach hinten oder nach vorne erstreckt, je nachdem, wo der Sitz positioniert ist. Ist zugleich auch eine Vertikalverstellung vorgesehen, so kann demzufolge eine Linearverstellung in wie auch eine Drehung um die z-Achse erfolgen.

Für den Fall, dass, wie beim autonomen Fahren durchaus denkbar, der oder die Sitze in einer Richtung quer zur Fahrzeuglängsachse verschiebbar oder um eine Vertikalachse verdrehbar sind, ist zur Ermöglichung einer Nachführbarkeit der oder jeder Luftlenkeinrichtung ferner vorgesehen, dass die oder jede Luftlenkeinrichtung an einer vertikal zur Schiene verlaufenden, an der Schiene längsverschiebbar angeordneten weiteren Schiene längsverschiebbar geführt ist. Diese weitere Schiene erlaubt eine Verschiebung in Querrichtung, also in Richtung der y-Achse, so dass bei verschobenem oder verschwenktem Sitz eine seitliche Nachführung einer Luftlenkeinrichtung möglich ist. In diesem Fall ist die oder jede Luftlenkeinrichtung mit dem Schlitten in dieser weiteren Schiene beweglich geführt, wobei diese weitere Schiene wiederum längsverschiebbar an der direkt dachseitig angeordneten Schiene geführt ist. Natürlich ist auch bei einer solchen Ausgestaltung eine entsprechende Verstellung in der z-Achse oder Verschwenkung in dieselbe möglich.

Kommt also ein solches Schienensystem zum Einsatz, so kann über dieses Schienensystem einerseits eine Bewegung in der x- und der y-Achse erfolgen, wie auch eine Linearbewegung in der z-Achse als auch eine Drehung um die z-Achse, so dass ein multifunktionales räumliches Verstellsystem gegeben ist, das eine optimale Positionsanpassung einer Luftlenkeinrichtung ermöglicht.

Ist die Luftlenkeinrichtung in ihrer Erstreckung, also ihrer Form veränderbar, kann die oder jede Luftlenkeinrichtung aus einem ersten und einem zweiten, relativ zueinander in Fahrzeuglängsrichtung verschiebbaren, aneinander geführten Schalenelementen bestehen. Dadurch, dass beide Schalenelemente bezüglich einander verschoben werden können, kann demzufolge auf einfache Weise die Formänderung durch Verschiebung der Elemente zueinander erwirkt werden.

Sofern keine zusätzliche Bewegbarkeit der Luftlenkeinrichtung relativ zum Fahrzeugdach über eine Schiene oder ein Schienensystem gegeben ist, kann das erste Schalenelement quasi fest respektive nicht längsbewegbar am Dach befestigt sein, während das zweite Schalenelement relativ zum ersten verschoben werden kann. Ist jedoch auch eine Linearverschiebung der Luftlenkeinrichtung vorgesehen, so wird das erste Schalenelement mit der Schiene oder der weiteren Schiene gekoppelt, während das zweite Schalenelement bewegbar an dem ersten Schalenelement angeordnet ist. Diese Anordnung ermöglicht eine Bewegung auch des zweiteiligen Luftleitelements in jedweder der vorgeschriebenen Raumrichtungen, sofern die einzelnen Bewegungsmöglichkeiten vorgesehen sind.

Das zweite Schalenelement kann im ersten Schalenelement ein- und ausfahrbar aufgenommen sein, das heißt, dass eine teleskopartige Anordnung gegeben ist. Alternativ kann das zweite Schalenelement auch an der Außenseite des erste Schalenelements bewegbar angeordnet sein.

Für eine automatische Bewegung der Schiene, der weiteren Schiene, der Luftlenkeinrichtung oder der Schalenelemente sind entsprechende, über die Steuerungseinrichtung ansteuerbare Aktoren vorgesehen, die je nach der vorzunehmenden Bewegung entsprechend ausgelegt sind, und über entsprechende Mechaniken mit den einzelnen Elementen respektive Bauteilen gekoppelt sind.

Die Bewegung und/oder Erstreckungsveränderung der oder jeder Luftlenkeinrichtung kann anwenderseitig, insbesondere durch die auf dem Sitz befindliche Person, durch Betätigung wenigstens einer Bedieneinrichtung steuerbar sein. Über diese Bedieneinrichtung kann die auf dem Sitz befindliche Person demzufolge die entsprechende Adaption veranlassen, gegebenenfalls auch als automatische Reaktion auf eine hierüber erwirkte Sitzverstellung, also als eine Nachführung der Luftlenkeinrichtung. Als eine solche Bedieneinrichtung kann eine zentrale Bedieneinrichtung beispielsweise in Form eines am Armaturenbrett oder im Bereich der Mittelkonsole vorgesehenen Touchscreens vorgesehen sein, auf den, wenn zwei Sitze vorgesehen sind, beide Personen zugreifen können. Alternativ kann auch für jeden Sitz eine separate Bedieneinrichtung, beispielsweise in der Türverkleidung verbaut, vorgesehen sein. Das heißt, dass die oder jede Bedieneinrichtung in diesem Fall sitzextern vorgesehen ist. Neben einem Touchscreen kann es sich auch um einen separaten Bedienknopf, eine Taste oder ein Joystick handeln.

Alternativ dazu kann eine solche Bedieneinrichtung aber auch sitzseitig integriert sein, beispielsweise im Bereich der Sitzseiten oder dergleichen. Besonders bevorzugt kann die oder jede Bedieneinrichtung ein der Verstellung des Sitzes in Fahrzeuglängsrichtung dienendes Bedienelement sein oder umfassen. Üblicherweise weist ein solcher längsverstellbarer Sitz ein Bedienelement in Form eines Schiebeschalters oder dergleichen auf, über das die Längsposition verstellt werden kann. Dieses Bedienelement kann nun gleichzeitig als Positionsgeber respektive als Element, über das die Positionsinformation des Sitzes abgegriffen wird, verwendet werden. Das heißt, dass die Luftlenkeinrichtung automatisch durch die Sitzverstellung erfolgt, also die Bewegung respektive Formveränderung und damit die Adaption der Luftlenkeinrichtung in Abhängigkeit der Verstellung beziehungsweise Position des Sitzes vorgenommen wird, wobei die Positionsinformation direkt von dem Bedienelement des Sitzes abgeleitet wird. In der Regel sind mehrere separate Bedienelemente am Sitz vorgesehen, eines für die Längsverstellung, eines für die Höhenverstellung, eines für die Verstellung der Lehnenneigung oder dergleichen, wobei zweckmäßigerweise das Bedienelement für die Längsverstellung als Informationsgeber verwendete wird.

Weitere Vorteile und Einzelheiten der Erfindung ergeben sich aus den im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs,
- Fig. 2: eine Prinzipdarstellung einer Anordnung eines Sitzes mit zugeordneter bewegbarer Luftlenkeinrichtung in einer ersten Position,
- Fig. 3: die Anordnung aus Fig. 2 mit Sitz und Luftlenkeinrichtung in einer zweiten Position mit abgesenkter Luftlenkeinrichtung,
- Fig. 4: die Anordnung aus Fig. 3 mit gedrehtem Sitz,
- Fig. 5: eine Anordnung aus Sitz und Luftlenkeinrichtung mit linearer Verschiebung der Luftlenkeinrichtung in einer ersten Position,
- Fig. 6: die Anordnung aus Fig. 5 mit verschobenem Sitz und verschobener Luftlenkeinrichtung,
- Fig. 7: eine Anordnung aus Sitz und Luftlenkeinrichtung mit um eine Vertikalachse drehbarer Luftlenkeinrichtung in einer ersten Position,
- Fig. 8: die Anordnung aus Fig. 7 in einer zweiten Position,
- Fig. 9: eine Anordnung aus Sitz und Luftlenkeinrichtung einer weiteren Ausführungsform, wobei der Sitz um eine Vertikalachse drehbar und die Luftlenkeinrichtung zusätzlich um eine Horizontalachse in Querrichtung verschiebbar ist, und
- Fig. 10: eine Aufsicht auf einen verstellten Sitz und eine verschobene Luftlenkeinrichtung.

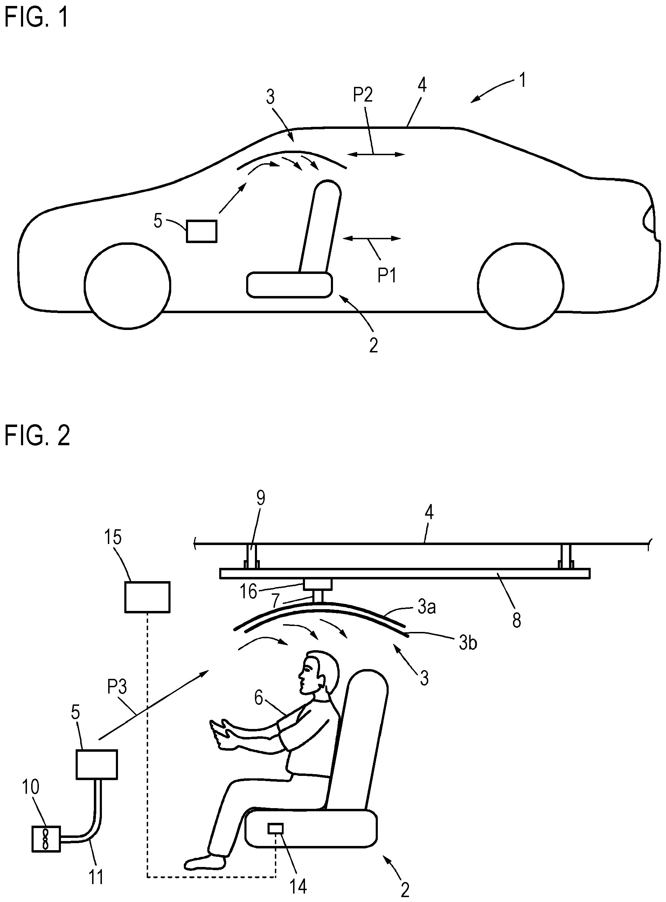

Fig. 1 zeigt ein erfindungsgemäßes Kraftfahrzeug 1, umfassend einen Sitz 2, sowie eine oberhalb des Sitzes 2 angeordnete Luftlenkeinrichtung 3, die unterhalb des Fahrzeugdachs 4 angeordnet ist. Der Sitz 2 ist, wie durch den Pfeil P1 dargestellt ist, in Längsrichtung des Fahrzeugs verstellbar. Auch die Luftlenkeinrichtung 3 ist, wie durch den Pfeil P2 dargestellt ist, ebenfalls veränderbar und die jeweilige Sitzposition adaptierbar. Sie dient dazu, über wenigstens einen positionsfesten, hier vor dem Sitz 2 angeordneten Luftauströmer 5 in Richtung des Fahrzeugdachs 4 und damit in die zumindest in Fahrzeuglängsrichtung gewölbte Luftlenkeinrichtung 3 eingeblasene Luft einzufangen und in Richtung des Sitzes 2 respektive einer auf dem Sitz befindlichen Person 6 umzulenken.

Üblicherweise sind natürlich zwei Sitze 2 nebeneinander im Kraftfahrzeug verbaut, die separat linear verschiebbar sind. Jedem der Sitze 2 ist in diesem Fall eine separate Luftlenkeinrichtung 3 zugeordnet, denen auch separate Luftausströmer 5 zugeordnet sind. Jede Luftlenkeinrichtung 3 ist darüber hinaus auch separat adaptierbar.

Diese Adaption kann auf unterschiedliche Weise erfolgen. Zum einen kann die Luftlenkeinrichtung 3 längs einer am Fahrzeugdach 4 befestigten Schiene in Fahrzeuglängsrichtung bewegbar sein, sie kann auch vertikal relativ zum Dach verschoben werden, um sich auf diese Weise einer neuen Sitzposition anpassen zu können. Unter Sitzposition wird hierbei nicht nur eine Veränderung in Fahrzeuglängsrichtung verstanden, sondern auch beispielsweise die Einnahme einer veränderten Sitzhaltung beispielsweise mit stark abgesenkter Lehne oder dergleichen. Sofern der Sitz 2 selbst um eine Vertikalachse verdrehbar ist, ist es auch denkbar, sofern erforderlich die Luftlenkeinrichtung 3 um eine Vertikalachse zu verdrehen, wenn dies der besseren Adaption dient.

Alternativ besteht die Möglichkeit, die Luftlenkeinrichtung 3 in ihrer Längserstreckung, mithin in ihrer Form respektive Geometrie zu verändern und so an eine geänderte Sitzposition zu adaptieren. Die Luftlenkeinrichtung 3 besteht in diesem Fall aus zwei separaten Schalen, die gegeneinander verschoben werden können, um die Formänderung vorzunehmen.

Wenngleich beide Adaptionsmöglichkeiten separat realisiert werden können, zeigen die nachfolgenden Ausführungsbeispiele jeweils kombinierte Anwendungen, bei denen also sowohl ein Schienensystem zum Verschieben in Fahrzeuglängsrichtung vorgesehen ist, als auch eine Verdrehbarkeit und Höhenverstellbarkeit der Luftlenkeinrichtung, wie auch eine Formadaptionsmöglichkeit durch Veränderung der Längserstreckung.

Fig. 2 zeigt ein erstes Ausführungsbeispiel, mit einem Sitz 2 und einer auf dem Sitz befindlichen Person 6 in einer Grundstellung. Die Luftlenkeinrichtung 3 besteht aus zwei separaten Schalenelementen, einem ersten Schalenelement 3a, das über einen Träger 7 und einen Schlitten 16 an einer Schiene 8, die unterhalb des Fahrzeugdachs über entsprechende Halter 9 befestigt ist, angeordnet ist. An dem ersten Schalenelement 3a ist ein zweites Schalenelement 3b angeordnet, das relativ zum ersten Schalenelement 3a verschoben werden kann, worauf nachfolgend noch eingegangen wird.

Vor dem Sitz befindet sich ein positionsfester Luftausströmer 5, dem über ein Gebläse 10 und einen Luftzuführkanal 11 Luft, beispielsweise über ein Klimagerät klimatisiert, zugeführt werden kann. Das Gebläse 10 wie auch der Luftausströmer 5 sind in eine Lüftungseinrichtung eingebunden, die der gesamten Innenraumbelüftung des Kraftfahrzeugs 1 dient, und die neben dem Gebläse 10 (gegebenenfalls auch weiteren Gebläsen 10) ein Klimagerät und insbesondere eine Steuerungseinrichtung umfasst, die durch eine entsprechende Ventil- und Klappensteuerung die entsprechenden Luftausströmer 5 mit Luft versorgen respektive ansteuern kann, gegebenenfalls aber auch die Luftausströmer 5 in ihrer Ausblasrichtung unmittelbar steuern kann, indem entsprechende Lamellen oder dergleichen der Luftausströmer 5 automatisch verschoben werden können. In der Lüftungseinrichtung sind entsprechende Ventile oder Klappen wie auch Aktoren etc. integriert, die über die Steuerungseinrichtung gesteuert werden und die entsprechenden Aktionen ermöglichen.

Der Luftausströmer 5 ist derart positioniert und, gegebenenfalls über die Steuerungseinrichtung gesteuert, eingerichtet, dass er die zugeführte Luft, wie durch den Pfeil P3 dargestellt ist, in Richtung des Fahrzeugdachs 4 und dort quasi unter die Luftlenkeinrichtung 3 bläst. Die Luftlenkeinrichtung 3 ist in Fahrzeuglängsrichtung gewölbt, sie kann zusätzlich auch in Fahrzeugquerrichtung gewölbt sein, so dass sie quasi hauben- oder baldachinartig über dem Sitz angeordnet ist und eine Umlenkung der zugeführten Luft in Richtung des Sitzes 2 und damit der Person 6 ermöglicht, wie in Fig. 2 angedeutet ist.

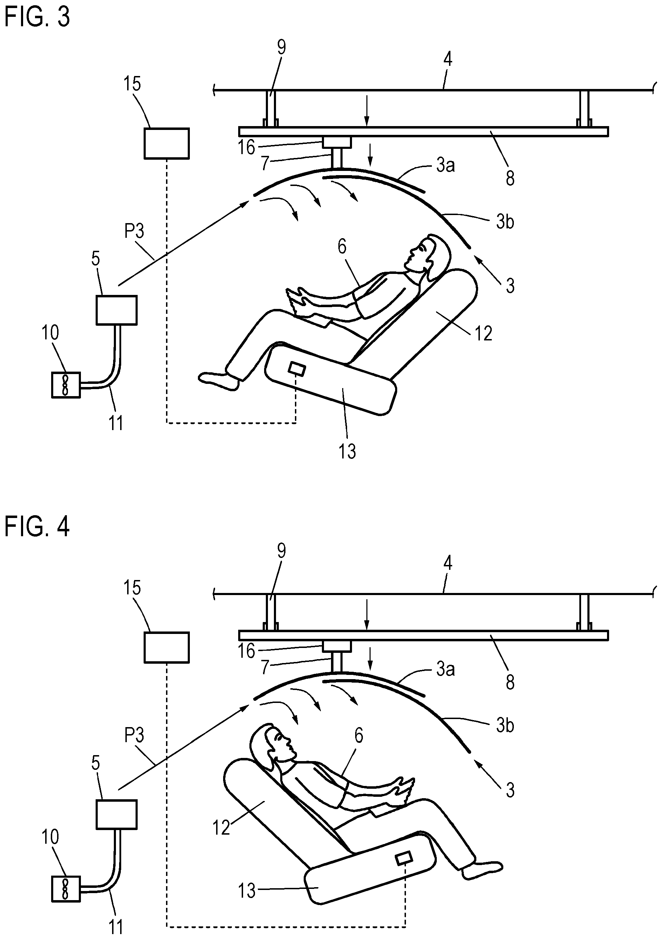

Fig. 3 zeigt die Anordnung aus Fig. 2, wobei sich hier die Position des Sitzes 2 insoweit geändert hat, als die Lehne 12 und die Sitzfläche 13 verschwenkt wurden, die Person 6 nimmt eine eher liegende Position ein und ist etwas abgesenkt. Um die Luftlenkeinrichtung 3 wiederum bestmöglich positionieren zu können, um die von dem Luftausströmer 5 zugeführte Luft zur Person 6 umzulenken, wird einerseits die Schiene 8 geringfügig vertikal nach unten gefahren, wozu die Halter 9, die teleskopierbar sind, ausgefahren werden. Alternativ oder zusätzlich kann auch der Träger 7 als Teleskopträger ausgeführt sein, der eine geringfügige Vertikalverschiebung der Luftlenkeinrichtung 3 nach unten ermöglicht. Hierdurch ist es möglich, die Luftlenkeinrichtung 3 wiederum näher zur Person 6 zu bringen, deren Position aufgrund der Liegehaltung etwas abgesenkt ist.

Gleichzeitig ist, nachdem durch das Absenken der Lehne 12 die Person 6 auch nach hinten gelehnt ist, die Luftlenkeinrichtung 3 in ihrer Fahrzeuglängserstreckung geändert worden. Ersichtlich wurde das Schalenelement 3b bezüglich des positionsfest am Träger 7 befindlichen Schalenelements 3a verschoben, also nach hinten ausgefahren. Es übergreift erneut den Kopf der Person 6, wie auch in Fig. 2.

Auf diese Weise wird wiederum die über die Luftausströmer 5 zugeblasene Luft bestmöglich in Richtung der Person 6 umgelenkt, wenngleich sich aufgrund der Einnahme der Liegestellung die Person auch von dem Luftausströmer 5 entfernt hat.

Fig. 4 zeigt die Anordnung aus Fig. 3, bei der der Sitz 2 um eine Vertikalachse um 180° verdreht wurde. Die Luftlenkeinrichtung 3 befindet sich nach wie vor in der abgesenkten, ausgefahrenen Position. Da sie jedoch die Person 6 nahezu über die gesamte Länge auch in dieser Sitzposition übergreift, kann wiederum eine gute Belüftung erfolgen, nachdem die über den Luftausströmer 5 zugeführte Luft wiederum entsprechend zur Person 6 umgelenkt wird.

Um die entsprechenden Sitzpositionen einnehmen zu können, ist an dem Sitz 2, siehe Fig.2, eine Bedieneinrichtung 14 vorgesehen, die beispielsweise mehrere Taster oder Schalter umfasst, die der Verstellung des Sitzes 2 dienen. Der Sitz 2 kann hierüber beispielsweise in Fahrzeuglängsrichtung vor und zurück gefahren werden, es kann aber auch, wie die Figuren 3 und 4 zeigen, die Lehne 12 abgesenkt und das Sitzteil 13 verstellt werden.

Diese Bedieneinrichtung 14 respektive zumindest eines ihrer Bedienelemente dient gleichzeitig auch als Signal- oder Informationsgeber, liefern also entsprechende Informationen, gestützt auf welche eine Steuerungseinrichtung 15, die der Verstellung der Luftlenkeinrichtung 3 dient, die entsprechenden Aktoren ansteuert, die für die entsprechende Verstellung erforderlich sind. Diese Aktoren sind vorliegend nicht im Detail eingezeichnet. Es sind jedoch eine Mehrzahl an Aktoren vorgesehen, die unterschiedlichen Stellaufgaben dienen. So sind entsprechende Aktoren für die Linearverschiebung der Halter 9 wie auch des Trägers 7 vorgesehen. Der Träger 7 ist an einem Schlitten 16 befestigt, der linear verschiebbar auf der Schiene 8 geführt ist, wozu ebenfalls ein entsprechender Aktor vorgesehen ist. Ebenso ist ein Aktor zur Verschiebung der zwei Schalenelemente 3a, 3b zueinander vorgesehen. Die Steuerungseinrichtung 15 ist nun in der Lage, die einzelnen Aktoren derart zu steuern, dass die Luftlenkeinrichtung 3 optimal an die Sitzposition adaptiert wird.

Hierzu werden die von der Bedieneinrichtung 14 gegebenen Positionsinformationen zweckmäßigerweise als entsprechende Steuerparameter respektive zur Ermittlung derselben zugrunde gelegt, um die Luftlenkeinrichtung 3 entsprechend nachführen zu können. Separate Positionserfassungssensoren oder dergleichen sind in diesem Fall nicht erforderlich.

Grundsätzlich besteht jedoch die Möglichkeit, eine sitzextern angeordnete Bedieneinrichtung vorzusehen, über die die Sitzverstellung erfolgt, und die ebenfalls der Gabe der entsprechenden Informationen zur Ermittlung der Steuerparameter der Steuerungseinrichtung 15 dienen.

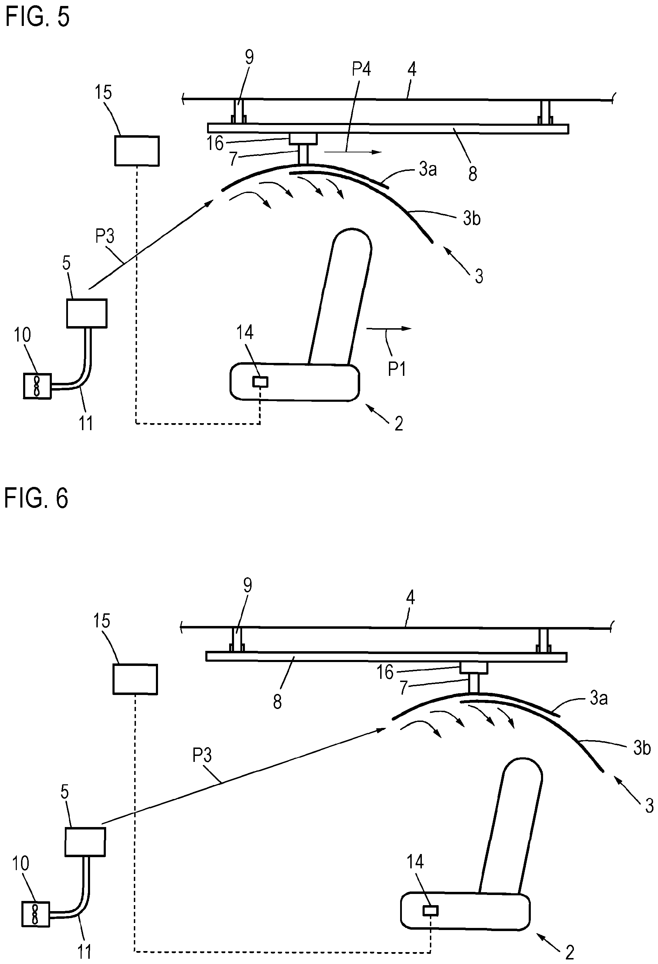

Während die Figuren 2 bis 4 die Möglichkeit der Vertikalverschiebung der Luftlenkeinrichtung 3 über die Verschiebung der Schiene 8 und/oder der Luftlenkeinrichtung 3 relativ zur Schiene 8 beschrieben haben, zeigen die Figuren 5 und 6 die Möglichkeit, die Luftlenkeinrichtung 3, wie durch den Pfeil P4 dargestellt ist, in Fahrzeuglängsrichtung entlang der Schiene 8 zu verschieben. Figur 6 geht hierbei exemplarisch von einem Positionszustand der Schiene 8 und der Luftlenkeinrichtung 3 aus, wie er in Fig. 2 gezeigt ist, also einer abgesenkten Position, wie auch die Schalenelemente 3a, 3b zueinander verschoben sind. Es sei angenommen, dass die auf dem Sitz 2 befindliche Person 6 nun über die Bedieneinrichtung 14 respektive ein dortiges Bedienelement den Sitz 2, wie durch den Pfeil P1 dargestellt ist, nach hinten verschiebt. Diese Verschiebeinformation wird durch die Steuerungseinrichtung 15 von der Bedieneinrichtung 14 abgeleitet und zur Ansteuerung eines Aktors, das den Schlitten 16 längs der Schiene 8, die sich in Fahrzeuglängsrichtung erstreckt, verfährt, genutzt. Der Schlitten 16 fährt solange entlang der Schiene 8, bis die Endposition des Sitzes 2, siehe Fig. 6, erreicht ist. die Sitzbewegung und die Bewegung der Luftlenkeinrichtung 3 kann synchron erfolgen, das heißt, dass die Luftlenkeinrichtung 3 unmittelbar der Sitzverstellung nachgeführt wird. Ersichtlich befindet sich die Luftlenkeinrichtung 3 erneut bestmöglich positioniert zum Sitz 2, die Schalenelemente 3a, 3b sind nach wie vor verschoben, so dass die hier nicht gezeigte Person wieder optimal übergriffen ist. Die über den Luftausströmer 5, dessen Ausblasrichtung über eine entsprechende Steuerungseinrichtung, gegebenenfalls auch über die Steuerungseinrichtung 15, gegebenenfalls aufgrund der verschobenen Sitzposition etwas nachgeführt ist, ausgeblasene Luft wird wiederum unter die Luftlenkeinrichtung 3 geblasen und dort gesammelt, verwirbelt und letztlich zum Sitz 2 umgelenkt.

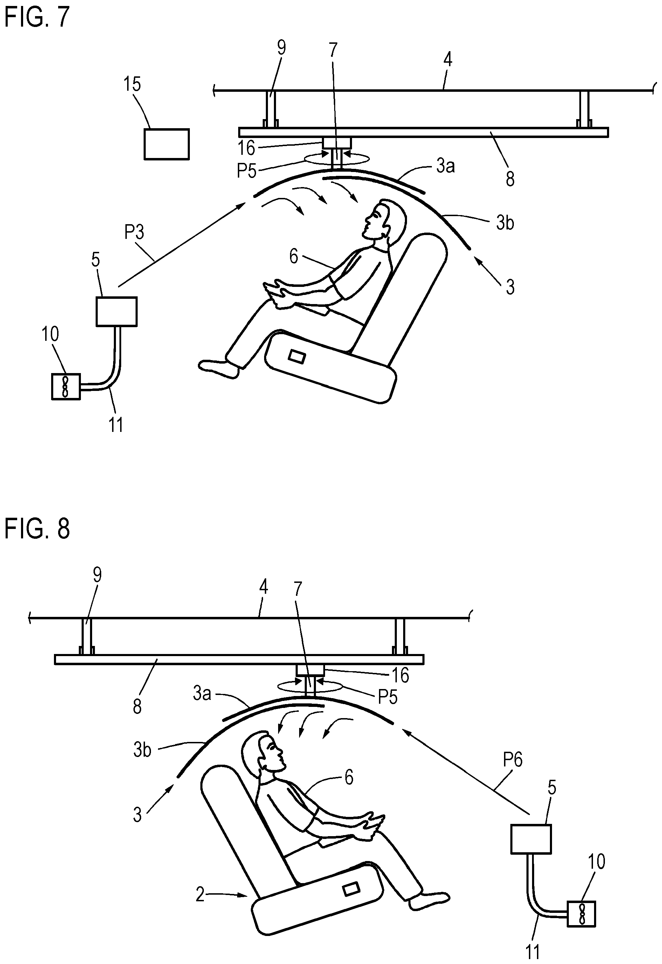

Die Figuren 7 und 8 zeigen eine Anordnung aus Sitz 2 und Luftlenkeinrichtung 3, bei der, ähnlich wie in Fig. 4, der Sitz um eine Vertikalachse verdreht werden kann. Zusätzlich kann aber auch, siehe Fig. 8 im Vergleich zu Fig. 7, die Luftlenkeinrichtung 3 um eine vertikale Achse um den Träger 7 verdreht werden, wie durch den Pfeil P5 dargestellt ist. Hierzu ist wiederum ein entsprechender Aktor vorgesehen, der durch die Steuerungseinrichtung 15 angesteuert wird.

Wird die Sitzposition mit Betätigen der Bedieneinrichtung 14 umgedreht, so erfasst auch hier die Steuerungseinrichtung 15 die entsprechende, von der Bedieneinrichtung abgeleitete Positionsinformation, woraufhin synchron die Luftlenkeinrichtung 3 nachgeführt und ebenfalls um die Vertikalachse gedreht werden kann. Hierbei kann es erforderlich sein, die vormals auseinandergeschobenen Schalenelemente 3a, 3b zusammenzufahren, um sie im Fahrzeuginneren verdrehen zu können. Sie werden sodann, wenn die Endposition eingenommen wird, automatisch wieder auseinandergeschoben.

Wie Fig. 8 zeigt, wurde gleichzeitig aber auch die Luftlenkeinrichtung 3 entlang der Schiene 8 über den Schlitten 16 linear verschoben und in ihrer Längsposition der neuen Sitzposition angepasst.

Bei dieser Ausgestaltung ist, siehe Fig. 8, die Luftlenkeinrichtung 3, nachdem sie gedreht wurde, näher zum Kopf der Person 6 positioniert, nachdem sich das Schalenelement 3b auf der anderen Seite befindet. In diesem Fall ist eine Luftzufuhr von der ursprünglichen Seite über den vor dem Sitz 2 angeordneten Luftausströmer, gesehen in Fahrtrichtung, nicht möglich. Wie Fig. 8 zeigt, wird in diesem Fall die Luft über einen weiteren positionsfesten Luftausströmer 5, der ansonsten in der Grundstellung hinter dem Sitz 2 angeordnet ist, zugeblasen, wie durch den Pfeil P6 dargestellt ist. Die Luft wird wiederum über ein entsprechendes Gebläse 10 zugeführt, bei dem es sich um dasselbe Gebläse 10 handeln kann wie vorstehend beschrieben, oder um ein anderes Gebläse 10. Gebläse 10 und Luftausströmer 5 sind wiederum in die Lüftungseinrichtung des Kraftfahrzeugs 1 eingebunden.

Ersichtlich erfolgt auch hier eine bestmögliche Belüftung der Person 6, nachdem die Luft wiederum, siehe Pfeil P6, zum Fahrzeugdach 4 hin ausgeblasen wird und von der Luftlenkeinrichtung 3 gesammelt, verwirbelt und umgelenkt wird.

An dieser Stelle der Hinweis, dass anstelle einer Rotation um die z-Achse auch die Möglichkeit besteht, das Schalenelement 3b zur anderen Seite auszuschieben, mithin also ausgehend von Fig. 7 nach links über das Schalenelement 3a hinaus, so dass sich ebenfalls die in Fig. 8 gezeigte Anordnung ergibt.

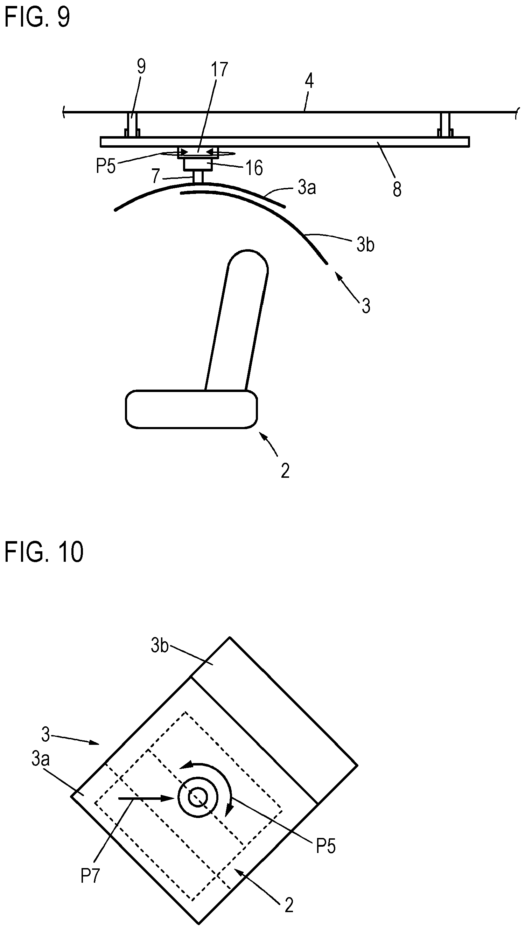

Die Figuren 9 und 10 zeigen schließlich eine Anordnung umfassend einen Sitz 2 und eine Luftlenkeinrichtung 3 bestehend aus den Schalenelementen 3a, 3b, wobei hier die Luftlenkeinrichtung 3 zusätzlich in Fahrzeugquerrichtung verschoben werden kann. Hierzu ist die Luftlenkeinrichtung 3 über den Schlitten 16 an einer Querschiene 17, die längsverschiebbar an der dachseitig angeordneten Schiene 8 angeordnet ist, querverfahrbar gelagert. In diesem Fall ist also eine maximal räumliche Bewegbarkeit der Luftlenkeinrichtung 3 gegeben, wenn alle Freiheitsgrade bedient werden. So kann die Luftlenkeinrichtung 3 durch Verschieben der weiteren Schiene 17 längs der Schiene 8 in Fahrzeuglängsrichtung, also in Richtung der x-Achse verschoben werden. Sie kann über den Schlitten 16 längs der weiteren Schiene 17 in Querrichtung, also längs der y-Achse verschoben werden. Und sie kann über die teleskopierbaren Halter 9 respektive den teleskopierbaren Träger 7 auch höhenverstellt, also längs der z-Achse bewegt werden. Es ist also ein dreidimensionales Schienensystem vorgesehen. Darüber hinaus besteht die Rotationsmöglichkeit um die Vertikalachse, also um den Träger 7, wie natürlich auch die Verschiebung der Schalenelemente 3a, 3b zueinander möglich ist.

Der Sitz 2 gemäß Anordnung in Fig. 9 und 10 ist um eine Vertikalachse verdrehbar, kann also eine Schrägposition gesehen in Fahrzeuglängsrichtung einnehmen, wie in Fig. 10 gezeigt. In einem solchen Fall mit nur geringer Verschwenkung ist es erforderlich, die Luftlenkeinrichtung 3 auch seitlich nachzuführen, wie Fig. 10 deutlich zeigt. Ersichtlich ist, wie durch den Pfeil P7 dargestellt, die Luftlenkeinrichtung 3 einerseits über den Schlitten 16 längs der weiteren Schiene 17 etwas verschoben, andererseits wurde sie, wie durch den Pfeil P5 dargestellt, auch geringfügig um die vertikale Achse verdreht, so dass sie wiederum bestmöglich bezüglich des verschwenkten Sitzes 2 positioniert ist.

Ist ein zweiter Sitz vorgesehen, so ist auch diesem eine solche Luftlenkeinrichtung 3, die in den vorstehend beschriebenen Ausgestaltungsvarianten ausgeführt respektive beweglich sein kann, zugeordnet. Der weitere Sitz 2 wie auch die weitere Luftlenkeinrichtung 3 sind unabhängig vom ersten Sitz 2 und der ersten Luftlenkeinrichtung 3 beliebig bewegbar, so dass eine individuelle Sitz- oder Personenbelüftung und damit auch die Ausbildung einer individuellen Klimazone möglich ist.

Die Luftlenkeinrichtung 3 ist, wie in den Figuren gezeigt, zumindest in Fahrzeuglängsrichtung gewölbt. Sie kann aber zusätzlich auch in Fahrzeugquerrichtung gewölbt sein, so dass die Luft, die von unten eingeblasen wird, auch eine gewisse Seitenführung während der Umlenkung erfolgt und besser in Richtung der Person konzentriert werden kann.

## Patentansprüche

1. Kraftfahrzeug, umfassend wenigstens einen in Fahrzeuglängsrichtung verstellbaren Sitz (2), sowie eine Lüftungseinrichtung mit wenigstens einem Luftausströmer (5), wobei über wenigstens einen Luftausströmer (5), der positionsfest vor oder hintern dem Sitz (2) angeordnet ist, über ein Gebläse (10) zugeführte Luft in Richtung des Fahrzeugdachs (4) ausblasbar ist, wobei zwischen dem Fahrzeugdach (4) und dem Sitz (2) eine schalenartige, bewegbare Luftlenkeinrichtung (3) geeignet zum Umlenken der zugeblasenen Luft in Richtung einer auf dem Sitz (2) befindlichen Person (6) vorgesehen ist, **dadurch gekennzeichnet, dass** die Luftlenkeinrichtung (3) relativ zu dem Sitz (2) in Fahrzeuglängsrichtung bewegbar und/oder in ihrer Erstreckung in Fahrzeuglängsrichtung veränderbar ist.

2. Kraftfahrzeug nach Anspruch 1,
**dadurch gekennzeichnet,**
**dass** zwei benachbarte Sitze (2), die jeweils unabhängig voneinander in Fahrzeuglängsrichtung verstellbar sind, vorgesehen sind, wobei vor oder hinter jedem Sitz (2) wenigstens ein Luftausströmer (5) vorgesehen ist, über den über ein, gegebenenfalls separates, Gebläse (10) zugeführte Luft in Richtung des Fahrzeugdachs (4) ausblasbar ist, wobei zwischen dem Fahrzeugdach (4) und jedem Sitz (2) jeweils eine schalenartige, bewegbare Luftlenkeinrichtung (3) vorgesehen ist.

3. Kraftfahrzeug nach Anspruch 1 oder 2,
**dadurch gekennzeichnet,**
**dass** eine Steuerungseinrichtung (15) vorgesehen ist, über die der automatische Bewegungsbetrieb und/oder die Veränderung der Erstreckung der oder jeder Luftlenkeinrichtung (3) steuerbar ist.

4. Kraftfahrzeug nach 3,
**dadurch gekennzeichnet,**
**dass** die oder jede Luftlenkeinrichtung (3) an wenigstens einer am Fahrzeugdach (4) in Fahrzeuglängsrichtung verlaufenden Schiene (8) längsverschiebbar geführt ist.

5. Kraftfahrzeug nach Anspruch 4,
**dadurch gekennzeichnet,**
**dass** die oder jede Schiene (8) relativ zum Fahrzeugdach (4) und/oder die oder jede Luftlenkeinrichtung (3) relativ zur Schiene (8) höhenverstellbar ist.

6. Kraftfahrzeug nach Anspruch 4 oder 5,
**dadurch gekennzeichnet,**
**dass** die oder jede Luftlenkeinrichtung (3) um eine vertikal zu der oder jeder Schiene (8) verlaufende Achse drehbar ist.

7. Kraftfahrzeug nach einem der Ansprüche 4 bis 6,
**dadurch gekennzeichnet,**
**dass** die oder jede Luftlenkeinrichtung (3) an einer vertikal zur Schiene (8) verlaufenden, an der Schiene (8) längsverschiebbar angeordneten weiteren Schiene (17) längsverschiebbar geführt ist.

8. Kraftfahrzeug nach einem der Ansprüche 3 bis 7,
**dadurch gekennzeichnet,**
**dass** die oder jede Luftlenkeinrichtung (3) aus einem ersten und einem zweiten, relativ zueinander in Fahrzeuglängsrichtung verschiebbaren, aneinander geführten Schalenelementen (3a, 3b) besteht.

9. Kraftfahrzeug nach Anspruch 8,
**dadurch gekennzeichnet,**
**dass** das erste Schalenelement (3a) mit der Schiene (8) oder der weiteren Schiene (17) gekoppelt ist und das zweite Schalenelement (3b) bewegbar an dem ersten Schalenelement (3a) angeordnet ist.

10. Kraftfahrzeug nach Anspruch 8 oder 90,
**dadurch gekennzeichnet,**
**dass** das zweite Schalenelement (3b) im ersten Schalenelement (3a) ein- und ausfahrbar aufgenommen ist, oder an der Außenseite des ersten Schalenelements (3a) bewegbar angeordnet ist.

11. Kraftfahrzeug nach einem der Ansprüche 3 bis 10,
**dadurch gekennzeichnet,**
**dass** für eine automatische Bewegung der Schiene (3), der weiteren Schiene (17), der Luftlenkeinrichtung (3) oder der Schalenelemente (3a, 3b) über die Steuerungseinrichtung (15) ansteuerbare Aktoren vorgesehen sind.

12. Kraftfahrzeug nach einem der Anspruch 3 bis 11,
**dadurch gekennzeichnet,**
**dass** die Bewegung und/oder Erstreckungsveränderung der oder jeder Luftlenkeinrichtung (3) anwenderseitig, insbesondere durch die auf dem Sitz (2) befindliche Person (6), durch Betätigung wenigstens einer Bedieneinrichtung (14) steuerbar ist.

13. Kraftfahrzeug nach Anspruch 12,
**dadurch gekennzeichnet,**
**dass** die oder jede Bedieneinrichtung (14) sitzextern vorgesehen ist.

14. Kraftfahrzeug nach Anspruch 12,
**dadurch gekennzeichnet,**
**dass** die oder jede Bedieneinrichtung (14) sitzseitig integriert ist.

15. Kraftfahrzeug nach Anspruch 14,
**dadurch gekennzeichnet,**
**dass** die oder jede Bedieneinrichtung (14) ein der Verstellung des Sitzes (2) in Fahrzeuglängsrichtung dienendes Bedienelement ist oder umfasst.

16. Kraftfahrzeug nach einem der vorangehenden Ansprüche,
**dadurch gekennzeichnet,**
**dass** die oder jede Luftlenkeinrichtung (3) in sowohl in Längs- als auch in Querrichtung gewölbt ist.

## Claims

1. Motor vehicle, comprising at least one seat (2) which can be adjusted in the vehicle longitudinal direction, and a ventilation device having at least one air outlet (5), wherein air supplied by a fan (10) via at least one air outlet (5), which is arranged in a fixed position in front of or behind the seat (2), can be blown out in the direction of the vehicle roof (4), wherein a shell-like movable air directing device (3) is provided between the vehicle roof (4) and the seat (2) and is suitable for redirecting the blown air in the direction of a person (6) located on the seat (2), **characterised in that** the air directing device (3) can be moved relative to the seat (2) in the vehicle longitudinal direction and/or can be varied in its reach in the vehicle longitudinal direction.

2. Motor vehicle according to claim 1,
**characterised in that**
two adjacent seats (2) are provided which can be adjusted respectively independently of one another in the vehicle longitudinal direction, wherein at least one air outlet (5) is provided in from of or behind each seat (2), via which air outlet air supplied by a fan (10), which may be separate, can be blown out in the direction of the vehicle roof (4), wherein a shell-like, movable air directing device (3) is provided between the vehicle roof (4) and each seat (2).

3. Motor vehicle according to claim 1 or 2,
**characterised in that**
a control device (15) is provided which can control the automatic movement operation and/or the change in reach of the or each air directing device (3).

4. Motor vehicle according to claim 3,
**characterised in that**
the or each air directing device (3) is guided longitudinally displaceably on at least one rail (8) running on the vehicle roof (4) in the vehicle longitudinal direction.

5. Motor vehicle according to claim 4,
**characterised in that**
the or each rail (8) is height-adjustable relative to the vehicle roof (4) and/or the or each air directing device (3) is height-adjustable relative to the rail (8).

6. Motor vehicle according to claim 4 or 5,
**characterised in that**
the or each air directing device (3) can be rotated about an axis extending vertically to the or each rail (8).

7. Motor vehicle according to any one of claims 4 to 6,
**characterised in that**
the or each air directing device (3) is guided in a longitudinally displaceable manner on a further rail (17) extending vertically to the rail (8) and arranged in a longitudinally displaceable manner on the rail (8).

8. Motor vehicle according to any one of claims 3 to 7,
**characterised in that**
the or each air directing device (3) consists of a first and a second shell element (3a, 3b) which can be displaced relative to one another in the vehicle longitudinal direction and are guided relative to one another.

9. Motor vehicle according to claim 8,
**characterised in that**
the first shell element (3a) is coupled to the rail (8) or the further rail (17) and the second shell element (3b) is arranged movably on the first shell element (3a).

10. Motor vehicle according to claim 8 or 9,
**characterised in that**
the second shell element (3b) is mounted in the first shell element (3a) in a retractable and extendable manner, or is movably arranged on the outside of the first shell element (3a).

11. Motor vehicle according to any one of claims 3 to 10,
**characterised in that**
actuators which can be activated by the control device (15) are provided for an automatic movement of the rail (3), the further rail (17), the air directing device (3) or the shell elements (3a, 3b).

12. Motor vehicle according to any one of claims 3 to 11,
**characterised in that**
the movement and/or variation in reach of the or each air directing device (3) can be controlled by the user, in particular by the person (6) located on the seat (2), by activating at least one operating device (14).

13. Motor vehicle according to claim 12,
**characterised in that**
the or each operating device (14) is provided externally to the seat.

14. Motor vehicle according to claim 12,
**characterised in that**
the or each operating device (14) is integrated on the seat side.

15. Motor vehicle according to claim 14,
**characterised in that**
the or each operating device (14) is or comprises an operating element used for adjusting the seat (2) in the vehicle longitudinal direction.

16. Motor vehicle according to any one of the preceding claims,
**characterised in that**
the or each air directing device (3) is curved in both longitudinal and transverse direction.

## Revendications

1. Véhicule automobile, comprenant au moins un siège (2) réglable dans la direction longitudinale du véhicule, ainsi qu'un dispositif de ventilation avec au moins un diffuseur d'air (5), dans lequel par le biais d'au moins un diffuseur d'air (5) qui est agencé de manière fixe en position avant ou derrière le siège (2), de l'air amené par le biais d'une soufflante (10) peut être soufflé en direction du toit de véhicule (4), dans lequel entre le toit de véhicule (4) et le siège (2) est prévu un dispositif de déviation d'air (3) mobile de type coque approprié pour la déviation de l'air soufflé en direction d'une personne (6) se trouvant sur le siège (2), **caractérisé en ce que** le dispositif de déviation d'air (3) est mobile par rapport au siège (2) dans la direction longitudinale du véhicule et/ou est modifiable dans son étendue dans la direction longitudinale du véhicule.

2. Véhicule automobile selon la revendication 1,
**caractérisé en ce que**
deux sièges (2) contigus qui sont réglables respectivement indépendamment l'un de l'autre dans la direction longitudinale du véhicule, sont prévus, dans lequel avant ou derrière chaque siège (2), au moins un diffuseur d'air (5) est prévu, par le biais duquel de l'air amené par le biais d'une soufflante (10) éventuellement séparée peut être soufflé en direction du toit de véhicule (4), dans lequel respectivement un dispositif de déviation d'air (3) mobile de type coque est prévu entre le toit de véhicule (4) et chaque siège (2).

3. Véhicule automobile selon la revendication 1 ou 2,
**caractérisé en ce que**
un dispositif de commande (15) est prévu, par le biais duquel le mode de déplacement automatique et/la modification de l'étendue du ou de chaque dispositif de déviation d'air (3) peut être commandée.

4. Véhicule automobile selon la revendication 3,
**caractérisé en ce que**
le ou chaque dispositif de déviation d'air (3) est guidé de manière mobile longitudinalement sur au moins un rail (8) s'étendant sur le toit de véhicule (4) dans la direction longitudinale du véhicule.

5. Véhicule automobile selon la revendication 4,
**caractérisé en ce que**
le ou chaque rail (8) est réglable en hauteur par rapport au toit de véhicule (4) et/ou le ou chaque dispositif de déviation d'air (3) par rapport au rail (8).

6. Véhicule automobile selon la revendication 4 ou 5,
**caractérisé en ce que**
le ou chaque dispositif de déviation d'air (3) est rotatif autour d'un axe s'étendant verticalement au ou à chaque rail (8).

7. Véhicule automobile selon l'une quelconque des revendications 4 à 6,
**caractérisé en ce que**
le ou chaque dispositif de déviation d'air (3) est guidé de manière mobile longitudinalement sur un autre rail (17) agencé de manière mobile longitudinalement sur le rail (8), s'étendant verticalement au rail (8).

8. Véhicule automobile selon l'une des revendications 3 à 7,
**caractérisé en ce que**
le ou chaque dispositif de déviation d'air (3) se compose d'un premier et d'un second élément de coque (3a, 3b) qui peuvent être déplacés l'un par rapport à l'autre dans la direction longitudinale du véhicule et sont guidés l'un sur l'autre.

9. Véhicule automobile selon la revendication 8,
**caractérisé en ce que**
le premier élément de coque (3a) est couplé au rail (8) ou à l'autre rail (17) et le second élément de coque (3b) est agencé de manière mobile sur le premier élément de coque (3a).

10. Véhicule automobile selon la revendication 8 ou 9,
**caractérisé en ce que**
le second élément de coque (3b) est reçu de manière rétractable et déployable dans le premier élément de coque (3a), ou est agencé de manière mobile sur le côté extérieur du premier élément de coque (3a).

11. Véhicule automobile selon l'une quelconque des revendications 3 à 10,
**caractérisé en ce que**
pour un mouvement automatique du rail (3), de l'autre rail (17), du dispositif de déviation d'air (3) ou des éléments de coque (3a, 3b), des actionneurs commandables par le biais du dispositif de commande (15) sont prévus.

12. Véhicule automobile selon l'une quelconque des revendications 3 à 11,
**caractérisé en ce que**
le déplacement et/ou la modification d'étendue du ou de chaque dispositif de déviation d'air (3) est commandable côté utilisateur, en particulier par la personne (6) se trouvant sur le siège (2), par actionnement d'au moins un dispositif de commande (14).

13. Véhicule automobile selon la revendication 12,
**caractérisé en ce que**
le ou chaque dispositif de commande (14) est prévu de manière externe au siège.

14. Véhicule automobile selon la revendication 12,
**caractérisé en ce que**
le ou chaque dispositif de commande (14) est intégré côté siège.

15. Véhicule automobile selon la revendication 14,
**caractérisé en ce que**
le ou chaque dispositif de commande (14) est ou comporte un élément de commande servant au réglage du siège (2) dans la direction longitudinale du véhicule.

16. Véhicule automobile selon l'une des revendications précédentes,
**caractérisé en ce que**
le ou chaque dispositif de déviation d'air (3) est courbé dans la direction longitudinale mais aussi transversale.
